# EUROPÄISCHE PATENTSCHRIFT

(11) **EP 3 055 161 B1**
(45) Veröffentlichungstag und Bekanntmachung des Hinweises auf die Patenterteilung: **01.05.2019**
(21) Anmeldenummer: 14808868.5
(22) Anmeldetag: 20.11.2014
(51) Int. Cl.: B60M 1/28, F16N 25/00

(54) **SCHMIERVORRICHTUNG ZUM SCHMIEREN DER ZUR AUFNAHME EINES FAHRDRAHTS VORGESEHENEN KONTAKTBEREICHE EINER NUT EINER STROMSCHIENE MIT EINEM SCHMIERSTOFF UND ANORDNUNG MIT DER SCHMIERVORRICHTUNG**
LUBRICATING DEVICE FOR LUBRICATING WITH A LUBRICANT THE CONTACT REGIONS OF A GROOVE OF A POWER RAIL, WHICH CONTACT REGIONS ARE DESIGNED TO HOLD A CONTACT WIRE, AND AN ASSEMBLY HAVING THE LUBRICATING DEVICE
DISPOSITIF DE LUBRIFICATION SERVANT À LUBRIFIER DES ZONES DE CONTACT, DESTINÉES À RECEVOIR UN CATÉNAIRE, D'UNE GORGE D'UN RAIL CONDUCTEUR AVEC UN LUBRIFIANT ET ENSEMBLE COMPORTANT UN DISPOSITIF DE LUBRIFICATION

(30) Priorität: 10.12.2013 DE 102013225482
(43) Veröffentlichungstag der Anmeldung: 17.08.2016
(73) Patentinhaber: Siemens Mobility GmbH, 81739 München (DE)
(72) Erfinder: LEUPOLD, Marcel, 75433 Maulbronn (DE); HAHN, Gunter, 91353 Hausen (DE); WOLF, Armin, 91353 Hausen (DE)
(86) Internationale Anmeldenummer: PCT/EP2014/075177
(87) Internationale Veröffentlichungsnummer: WO 2015/086286

(56) Entgegenhaltungen:
- EP-A1- 0 593 350
- JP-A- H08 119 006

## Beschreibung

Die Erfindung betrifft das technische Gebiet von Schmiervorrichtungen zum Schmieren der Kontaktbereiche zwischen einem Fahrdraht und einer Stromschiene mit einem Schmierstoff.

Bei der Installation einer Stromschiene wie z. B. einer Deckenstromschiene muss für die Übertragung der elektrischen Energie auf ein Schienenfahrzeug ein Kupferfahrdraht in ein Stromschienenprofil aus Aluminium eingeklemmt werden. Fahrdraht und Aluminiumprofil weisen hierfür jeweils Nutbereiche auf, die die Kontaktbereiche bilden. Zwischen Aluminium und Kupfer kommt es, wenn keine Maßnahmen dagegen eingeleitet werden, zur Kontaktkorrosion. Aufgrund von Lebensdaueranforderungen muss die Kontaktkorrosion zwischen den zwei Materialien ganz verhindert oder zumindest stark vermindert werden. Dies erfolgt durch das Aufbringen eines Schmierstoffs, wie z.B. eines speziellen Kontaktfettes, auf den Fahrdraht.

Eine Schmiervorrichtung zum Versehen eines Fahrdrahtes mit einem Schmierstoff vor der Einspannung des Fahrdrahtes in eine Stromschiene ist aus der Produktbroschüre "Deckenstromschienen DSS System Furrer & Frey, 2012 Furrer & Frey AG, Ingenieurbüro, Fahrleitungsbau, Tunstraße 35, Postfach 10082, CH-3000, Bern 6, auf Seite 29" bekannt. Die in der Broschüre vorgestellte so genannte Fettvorrichtung befüllt Nuten des Fahrdrahtes mit Fett als Schmierstoff und berücksichtigt für die Dosierung des Schmierstoffs die Geschwindigkeit der Bewegung der Schmiervorrichtung entlang des Fahrdrahts. Vor dem Einklemmvorgang des Fahrdrahtes in die Stromschiene wird dabei auf einem Montagewagen der Fahrdraht durch die Fettvorrichtung gezogen. Die Auftragung des Schmierstoffs erfolgt dabei in unterschiedlicher Qualität in Abhängigkeit von der Durchzugsgeschwindigkeit des Fahrdrahts und des Schmierstoffflusses. Meist wird dabei vergleichsweise viel Schmierstoff aufgetragen, insbesondere auch an Stellen wo keine Klemmung zwischen Fahrdraht und Aluminiumprofil besteht. Im Fahrbetrieb kommt es dadurch zur Verbrennung des überschüssigen Fettes, was einen erhöhten Verschleiß an den Stromabnehmern von Schienenfahrzeugen zur Folge hat. Außerdem besteht durch die dadurch hervorgerufenen Lichtbögen die Gefahr von Einbränden im Fahrdraht und im Aluminiumschienenprofil. Ein weiterer Nachteil ist es, dass der Schmierstoffverbrauch bei der Beschmierung vergleichsweise hoch ist.

Eine weitere Schmiervorrichtung, die Schmierstoff in die Nuten des Fahrdrahts aufträgt, ist aus der EP 0 593 350 A1 bekannt.

Die Erfindung stellt sich daher die Aufgabe, eine verbesserte Schmiervorrichtung bereit zu stellen, insbesondere eine Schmiervorrichtung, die den Schmierstoff im Vergleich zu bekannten Schmiervorrichtungen präziser aufträgt und den Schmierstoffverbrauch verringert.

Die Erfindung löst diese Aufgabe durch eine Schmiervorrichtung zum Schmieren der zur Aufnahme eines Fahrdrahts vorgesehenen Kontaktbereiche einer Nut einer Stromschiene mit einem Schmierstoff, umfassend ein Führungsmittel zum Führen der Schmiervorrichtung entlang der Stromschiene und eine Schmierstoffabgabeeinrichtung, die geeignet ist, im an die Stromschiene angebrachten Zustand der Schmiervorrichtung an die Kontaktbereiche der Stromschiene den Schmierstoff abzugeben.

Die erfindungsgemäße Schmiervorrichtung hat den Vorteil, dass der Schmierstoff anstatt auf den Fahrdraht auf die Nut der Stromschiene aufgetragen wird, was besonders schmierstoffsparend ist. Die Auftragung des Schmierstoffs erfolgt dabei in gleichbleibender Qualität. Im Fahrbetrieb kommt es dadurch zur Verhinderung oder zumindest einer sehr starken Verringerung der Verbrennung überschüssigen Schmierstoffs, was einen verminderten Verschleiß an den Stromabnehmern von Schienenfahrzeugen zur Folge hat und daher aufgrund verlängerter Lebensdauerzeiten und verringerten Wartungskosten besonders vorteilhaft ist. Weiterhin ist es ein Vorteil, dass die Gefahr von Einbränden im Fahrdraht und im Aluminiumschienenprofil durch Lichtbögen vermindert wird. Ein anderer Vorteil ist, dass der Arbeitsschritt der Auftragung von Schmierstoff zeitlich und räumlich getrennt von dem Arbeitsschritt der Einklemmung des Fahrdrahts in die Stromschiene erfolgen kann. Dies vereinfacht den Arbeitsablauf, weil nicht mehr wie bei der bekannten Schmiervorrichtung der mit Schmierstoff versehene Fahrdraht direkt in die Stromschiene eingeklemmt werden muss, um ein Aufrollen des flexiblen Fahrdrahts und damit verbunden ein Verschmieren des Schmierstoffs zu verhindern.

In einer bevorzugten Ausführungsform der erfindungsgemäßen Schmiervorrichtung ist das Führungsmittel zum formschlüssigen und gleitverschiebbaren Eingriff in die Nut der Stromschiene ausgebildet. Dies hat den Vorteil, dass die Schmiervorrichtung entlang einer Stromschiene gezogen werden kann, um eine Stromschiene der Länge nach mit Schmierstoff zu versehen.

In einer weiteren bevorzugten Ausführungsform der erfindungsgemäßen Schmiervorrichtung umfasst das Führungsmittel zwei um einen Kipppunkt kippbare Halteelemente, die im gekippten Zustand durch die Nut in die Stromschiene einführbar sind und im ungekippten Zustand das Führungsmittel an der Stromschiene festhalten. Dies ist vorteilhaft, weil die Schmiervorrichtung auf diese Weise automatisch oder von einem Benutzer an die Stromschiene angelegt und einfach wieder abgenommen werden kann.

In einer anderen bevorzugten Ausführungsform der erfindungsgemäßen Schmiervorrichtung bilden die Halteelemente im ungekippten Zustand einen im Wesentlichen V-förmigen Abschnitt. Dies ist vorteilhaft, weil der V-förmige Abschnitt im Wesentlichen komplementär zum Inneren der Stromschiene ausgebildet ist und die Schmiervorrichtung somit sicher an die Stromschiene angelegt werden kann.

In einer besonders bevorzugten Ausführungsform der erfindungsgemäßen Schmiervorrichtung bilden die Halteelemente im ungekippten Zustand einen im Wesentlichen Y-förmigen Querschnitt. Dies ist ein Vorteil, weil der Y-förmige Querschnitt der Halteelemente es gestattet, die weiteren Komponenten der Schmiervorrichtung wie etwa die Schmierstoffabgabeeinrichtung am länglichen Abschnitt der Halteelemente anzuordnen.

In einer anderen bevorzugten Ausführungsform der erfindungsgemäßen Schmiervorrichtung weist das Führungsmittel ein erstes Anpressmittel für das Anpressen des Führungsmittels an die Stromschiene aufweist. Dies ist vorteilhaft, weil das Anpressmittel einen sicheren Halt des Führungsmittels mit hinreichend kleinem Abstand des Führungsmittels zur Stromschiene gewährleistet.

In einer weiteren bevorzugten Ausführungsform der erfindungsgemäßen Schmiervorrichtung umfasst das erste Anpressmittel ein Federelement. Dies ist vorteilhaft, weil Federelemente weit verbreitet, zuverlässig und kostengünstig sind.

In einer anderen bevorzugten Ausführungsform der erfindungsgemäßen Schmiervorrichtung umfasst die Schmierstoffabgabeeinrichtung ein steuerbares Schmierstoffventil. Dies ist ein Vorteil, weil die Schmierstoffmenge, die auf eine Stromschiene aufgetragen werden soll, an die jeweiligen konstruktionsbedingten Anforderungen des Systems aus Fahrdraht und Stromschiene angepasst werden kann. Ein weiterer Vorteil ist es, dass die Schmierstoffmenge, die abgegeben wird, an die Geschwindigkeit, mit der die Schmiervorrichtung entlang der Stromschiene bewegt wird, angepasst werden kann.

In einer besonders bevorzugten Ausführungsform der erfindungsgemäßen Schmiervorrichtung weist die Schmierstoffabgabeeinrichtung eine Schmierstoffbürste zur gleichmäßigen Auftragung des Schmierstoffs auf die Kontaktbereiche der Stromschiene auf. Dies ist vorteilhaft, weil mittels der Schmierstoffbürste ein besonders gleichmäßiger und dünnschichtiger Auftrag des Schmierstoffs ermöglicht wird.

In einer besonders bevorzugten Ausführungsform der erfindungsgemäßen Schmiervorrichtung weist die Schmierstoffbürste ein zweites Anpressmittel für das Anpressen der Schmierstoffbürste an die Kontaktbereiche der Stromschiene auf. Dies ist ein Vorteil, da durch das Anpressen das gleichmäßige und dünnschichtige Auftragen des Schmierstoffs weiter verbessert wird.

In einer anderen bevorzugten Ausführungsform der erfindungsgemäßen Schmiervorrichtung umfasst das zweite Anpressmittel ein Federelement. Dies ist vorteilhaft, weil Federelemente weit verbreitet, zuverlässig und kostengünstig sind.

In einer weiteren bevorzugten Ausführungsform der erfindungsgemäßen Schmiervorrichtung ist die Schmiervorrichtung für die Verwendung von Kontaktfett als Schmierstoff ausgebildet. Dies ist vorteilhaft, weil Kontaktfett besonders gut zur Verminderung von Kontaktkorrosion zwischen Metallen wie z. B. Kupfer und Aluminium geeignet ist. Zur Verwendung von Kontaktfett, das vergleichsweise zähflüssig ist, muss die Schmiervorrichtung derart ausgebildet sein, dass das Kontaktfett mit hohem Druck an die Stromschiene geleitet werden kann.

In einer weiteren besonders bevorzugten Ausführungsform der erfindungsgemäßen Schmiervorrichtung weist die Schmiervorrichtung einen Sensor zur Erfassung der Geschwindigkeit beim Bewegen der Schmiervorrichtung entlang der Stromschiene auf. Das ist ein Vorteil, weil die Geschwindigkeit ein wichtiger Faktor für die korrekte Dosierung der Schmierstoffabgabe an die Stromschiene ist. Dabei ist es beispielsweise sinnvoll, bei höherer Geschwindigkeit eine größere Menge Schmierstoff abzugeben als bei niedriger Geschwindigkeit.

In einer weiteren bevorzugten Ausführungsform der erfindungsgemäßen Schmiervorrichtung weist die Schmiervorrichtung einen Sensor zur Erfassung der Geschwindigkeit beim Einziehen eines Fahrdrahtes in eine Einklemmvorrichtung für das Einklemmen des Fahrdrahtes in eine Stromschiene auf. Dies ist besonders vorteilhaft, wenn das Einklemmen des Fahrdrahtes und das Beschmieren der Stromschiene in einem Arbeitsgang entlang einer Stromschiene ausgeführt werden.

In einer weiteren bevorzugten Ausführungsform der erfindungsgemäßen Schmiervorrichtung erfasst der Sensor die Geschwindigkeit der Bewegung mechanisch. Dies ist vorteilhaft, weil die mechanische Erfassung der Geschwindigkeit besonders einfach und zuverlässig ist. Die mechanische Erfassung der Geschwindigkeit kann beispielsweise mittels eines auf der Stromschiene mitlaufend geführten Rads erfolgen, das am Führungsmittel angeordnet ist und die Drehungen des Rads in elektrische Signale umsetzt.

In einer weiteren bevorzugten Ausführungsform der erfindungsgemäßen Schmiervorrichtung umfasst erfasst der Sensor die Geschwindigkeit der Bewegung optisch. Dies ist ein Vorteil, weil optische Sensoren die Geschwindigkeit kontaktfrei ermitteln können. Weiterhin ist es mit Vorteil auch möglich, einen Ultraschallsensor, einen induktiven Sensor oder einen Radarsensor einzusetzen.

Weiterhin ist Gegenstand der Erfindung eine Anordnung, umfassend eine erfindungsgemäße Schmiervorrichtung und eine Schmierstoffpumpe, und einen Schmierstoffvorratsbehälter, und eine Steuereinrichtung zur Steuerung der Schmierstoffabgabe in Abhängigkeit von der Geschwindigkeit der Bewegung der Schmiervorrichtung. Es ergeben sich sinngemäß die gleichen Vorteile wie eingangs für die erfindungsgemäße Schmiervorrichtung angegeben.

In einer bevorzugten Ausführungsform der erfindungsgemäßen Anordnung umfasst die Schmierstoffpumpe eine pneumatische Pumpe und es ist ein Kompressor zur Bereitstellung eines pneumatischen Drucks vorgesehen. Dies ist ein Vorteil, weil pneumatische Pumpen einen hohen Druck bereit stellen können, um zähflüssige Schmierstoffe wie z.B. Kontaktfett zu pumpen.

Bevorzugte und vorteilhafte Ausführungsbeispiele der Erfindung sind in den Figuren 1 bis 6 dargestellt, dabei zeigt
- Figur 1: ein erstes Ausführungsbeispiel einer erfindungsgemäßen Schmiervorrichtung in einer Draufsicht,
- Figur 2: eine vereinfachte Seitenansicht der Schmiervorrichtung gemäß Figur 1 und
- Figur 3: eine andere vereinfachte Seitenansicht der Schmiervorrichtung gemäß Figur 1 und
- Figur 4: ein zweites Ausführungsbeispiel einer erfindungsgemäßen Schmiervorrichtung und
- Figur 5: eine vereinfachte Seitenansicht der Schmiervorrichtung gemäß Figur 4 und
- Figur 6: ein Ausführungsbeispiel einer erfindungsgemäßen Anordnung mit Schmiervorrichtung.

Dabei bezeichnen gleiche Bezugszeichen in den Figuren jeweils die gleichen baulichen Elemente.

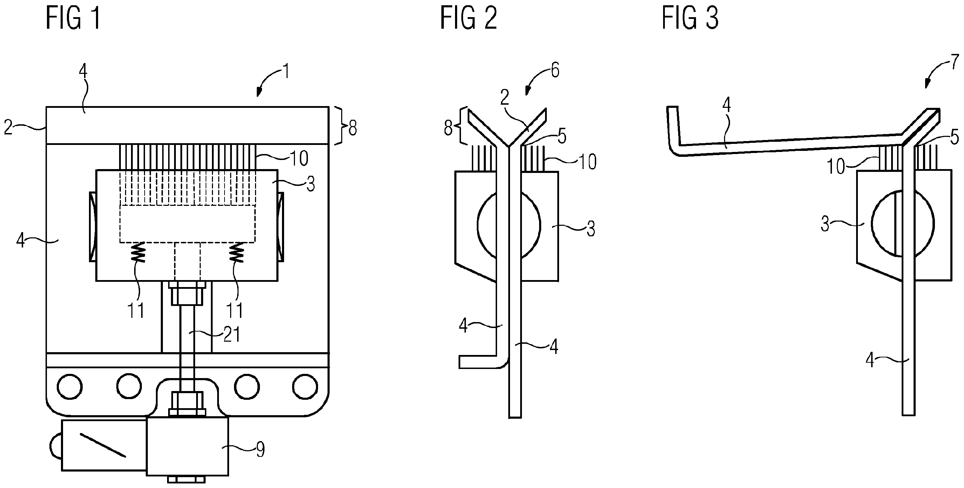

In der Figur 1 weist die Schmiervorrichtung 1 ein Führungsmittel 2 zum Führen der Schmiervorrichtung entlang einer nicht gezeigten Stromschiene auf und eine Schmierstoffabgabeeinrichtung 3, die eine Schmierstoffbürste 10 aufweist. Die Schmierstoffbürste 10 ist mittels Federelementen 11 im angelegten Zustand an eine Stromschiene anpressbar. Über ein steuerbares Schmierstoffventil 9 kann Schmierstoff durch einen Kanal 21 in die Schmierstoffabgabeeinrichtung 3 gepresst und mittels der Schmierstoffbürste 10 beim Entlangziehen der Schmierstoffvorrichtung an einer Stromschiene auf die Kontaktbereiche der Stromschiene angebracht werden. Das Führungsmittel 2 ist als zwei um einen Kipppunkt 5 kippbare Halteelemente ausgebildet, wobei der ungekippte Zustand 8 dargestellt ist, in dem die Schmiervorrichtung an einer nicht gezeigten Stromschiene entlang gezogen werden kann. Die kippbaren Halteelemente 4 sind dabei als zwei flächige Bleche ausgebildet, wobei auf dem in der Draufsicht zu sehenden Blech die weiteren Komponenten der Schmiervorrichtung 1, wie etwa die Schmierstoffabgabeeinrichtung 3, angebracht sind.

In der Figur 2 ist eine vereinfachte Seitenansicht 6 der in der Figur 1 gezeigten Schmiervorrichtung 1 dargestellt. Dabei sind die kippbaren Halteelemente 4 beziehungsweise die Bleche im ungekippten Zustand aneinander gelegt, so dass die Halteelemente 4 einen im Wesentlichen V-förmigen Abschnitt 8 aufweisen. Dieser V-förmige Abschnitt 8 ist zur Einführung in die Nut einer Stromschiene gedacht und ermöglicht es, die Schmiervorrichtung 1 entlang einer Stromschiene sicher zu führen.

In der Figur 3 ist eine andere vereinfachte Seitenansicht der in der Figur 1 gezeigten Schmiervorrichtung 1 dargestellt, bei der die Halteelemente 4 um den Kipppunkt 5 gekippt sind, so dass die vormals in V-förmiger Position angeordneten Enden der Halteelemente aneinander gelegt sind und so das Einführen des Führungsmittels durch die Nut einer Stromschiene in die Stromschiene ermöglichen. Dieser gekippte Zustand 7 kann nach Einführung des Führungsmittels 2 in die Nut einer Stromschiene in den in Figur 2 gezeigten Zustand zurückgekippt werden, wodurch die Schmiervorrichtung in einer Stromschiene arretiert wird.

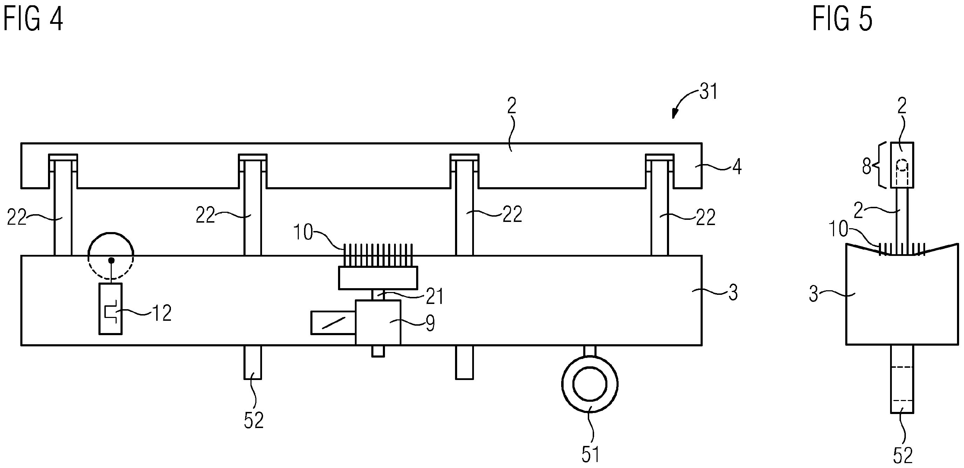

In der Figur 4 ist ein zweites Ausführungsbeispiel der erfindungsgemäßen Schmiervorrichtung 31 dargestellt, bei der das Haltemittel 2 als zwei kurze Bleche ausgebildet ist, die mittels Verbindungsbolzen 22 vom gekippten in den ungekippten Zustand überführt werden können. Dabei ist einer der Bolzen 52 verlängert ausgebildet, um es dem Benutzer zu ermöglichen, auf die die kippbaren Halteelemente 4 einzuwirken und diese in die Nut einer Stromschiene einzuführen und dort zu arretieren. Es ist ein Sensor 12 vorgesehen, der ein Rad aufweist, das beim Entlangziehen der Schmiervorrichtung 31 entlang einer Stromschiene gedreht wird. Die Drehung des Rads erfasst die Bewegung der Schmiervorrichtung 31 mechanisch und wird mittels des Sensors 12 in elektrische Signale umgewandelt. Weiterhin weist die Schmiervorrichtung 31 eine Ringöse 51 auf, an der beispielsweise ein Seil zum Entlangziehen der Schmiervorrichtung 31 angebracht werden kann.

In der Figur 5 ist eine vereinfachte Seitenansicht der in Figur 4 gezeigten Schmiervorrichtung 31 dargestellt, dabei ist die Schmiervorrichtung 31 mit ungekippten Halteelementen 4 abgebildet.

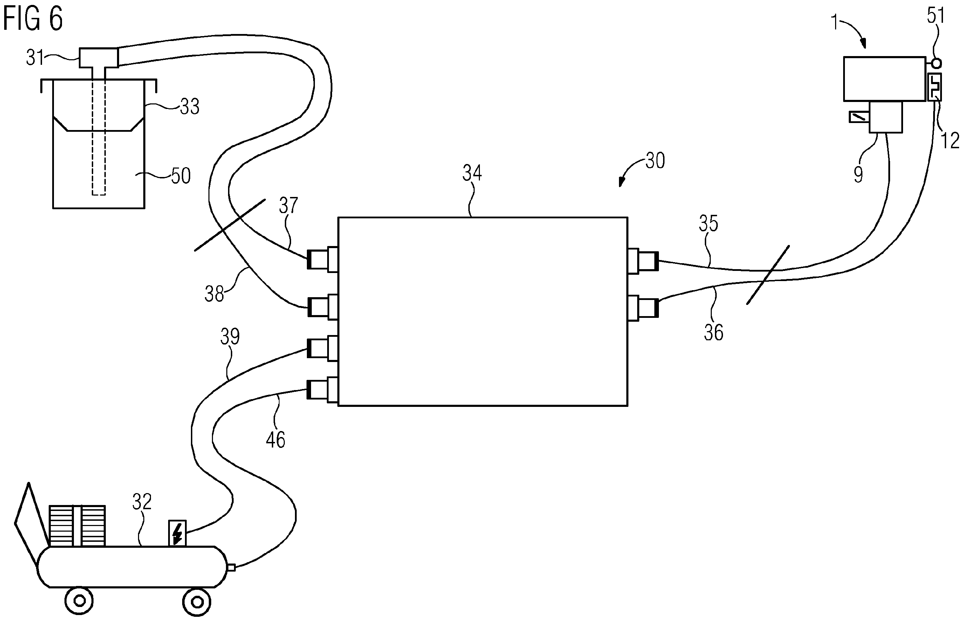

In der Figur 6 ist ein Ausführungsbeispiel einer erfindungsgemäßen Anordnung 30 dargestellt, die eine Schmiervorrichtung 1 mit einer Ringöse 51 und einem steuerbaren Schmierstoffventil 9 aufweist. Das steuerbare Schmierstoffventil 9 ist mittels einer Verbindungsleitung 35 mit einer Steuereinrichtung 34 verbunden. Über die Verbindungsleitung 35 erhält die Schmiervorrichtung 1 sowohl den Schmierstoff als auch Steuerbefehle zur Steuerung des steuerbaren Schmierstoffventils 9. Über eine Verbindungsleitung 36 werden elektrische Signale eines Sensors 12 von der Schmiervorrichtung 1 an die Steuereinrichtung 34 übertragen, so dass mittels der Steuereinrichtung 34 die Schmierstoffabgabe in der Schmiervorrichtung 1 an die jeweilige Geschwindigkeit des Entlangziehens der Schmiervorrichtung 1 entlang einer nicht gezeigten Stromschiene angepasst werden kann. Weiterhin ist in der Anordnung ein Schmierstoffvorratsbehälter 33 vorgesehen, der Kontaktfett als Schmierstoff 50 enthält. Der Schmierstoff 50 wird über eine Schmierstoffpumpe 31 an die Steuereinrichtung 34 gepumpt. Dabei erhält die Schmierstoffpumpe 31 Steuerbefehle von der Steuereinrichtung 34 über eine Verbindungsleitung 38. Zur Bereitstellung eines pneumatischen Druckes an die Schmierstoffpumpe 31 ist ein Kompressor 32 vorgesehen, der Steuerbefehle von der Steuereinrichtung 34 über eine Verbindungsleitung 39 erhält und ein hydraulisches Fluid über Verbindungsleitung 40 an die Steuereinrichtung 34 bereitstellen kann.

## Patentansprüche

1. Schmiervorrichtung (1) zum Schmieren der zur Aufnahme eines Fahrdrahts vorgesehenen Kontaktbereiche einer Nut einer Stromschiene mit einem Schmierstoff (50), umfassend ein Führungsmittel (2) zum Führen der Schmiervorrichtung (1) entlang der Stromschiene und
eine Schmierstoffabgabeeinrichtung (3), die geeignet ist, im an die Stromschiene angebrachten Zustand der Schmiervorrichtung (1) an die Kontaktbereiche der Stromschiene den Schmierstoff abzugeben.

2. Schmiervorrichtung (1) nach Anspruch 1, **dadurch gekennzeichnet, dass** das Führungsmittel (2) zum formschlüssigen und gleitverschiebbaren Eingriff in die Nut der Stromschiene ausgebildet ist.

3. Schmiervorrichtung (1) nach Anspruch 2, **dadurch gekennzeichnet, dass** das Führungsmittel (2) zwei um einen Kipppunkt (5) kippbare Halteelemente (4) umfasst, die im gekippten Zustand (7) durch die Nut in die Stromschiene einführbar sind und im ungekippten Zustand (6) das Führungsmittel an der Stromschiene festhalten.

4. Schmiervorrichtung (1) nach Anspruch 3, **dadurch gekennzeichnet, dass** die Halteelemente (4)im ungekippten Zustand (6) einen im Wesentlichen V-förmigen Abschnitt (8) bilden.

5. Schmiervorrichtung (1) nach Anspruch 3, **dadurch gekennzeichnet, dass** die Halteelemente (4) im ungekippten Zustand (6) einen im Wesentlichen Y-förmigen Querschnitt bilden.

6. Schmiervorrichtung (1) nach einem der vorhergehenden Ansprüche, **dadurch gekennzeichnet, dass** das Führungsmittel (2) ein erstes Anpressmittel für das Anpressen des Führungsmittels an die Stromschiene aufweist.

7. Schmiervorrichtung (1) nach Anspruch 6, **dadurch gekennzeichnet, dass** das erste Anpressmittel ein Federelement umfasst.

8. Schmiervorrichtung (1) nach einem der vorhergehenden Ansprüche, **dadurch gekennzeichnet, dass** die Schmierstoffabgabeeinrichtung (3) ein steuerbares Schmierstoffventil (9) umfasst.

9. Schmiervorrichtung (1) nach einem der vorhergehenden Ansprüche, **dadurch gekennzeichnet, dass** die Schmierstoffabgabeeinrichtung (3) eine Schmierstoffbürste (10) zur gleichmäßigen Auftragung des Schmierstoffs (50) auf die Kontaktbereiche der Stromschiene aufweist.

10. Schmiervorrichtung (1) nach Anspruch 9, **dadurch gekennzeichnet, dass** die Schmierstoffbürste (10) ein zweites Anpressmittel (11) für das Anpressen der Schmierstoffbürste (10) an die Kontaktbereiche der Stromschiene aufweist.

11. Schmiervorrichtung (1) nach Anspruch 10, **dadurch gekennzeichnet, dass** das zweite Anpressmittel (11) ein Federelement umfasst.

12. Schmiervorrichtung (1) nach einem der vorhergehenden Ansprüche, **dadurch gekennzeichnet, dass** die Schmiervorrichtung (1) einen Sensor (12) zur Erfassung der Geschwindigkeit beim Bewegen der Schmiervorrichtung (1) entlang der Stromschiene aufweist.

13. Schmiervorrichtung (1) nach Anspruch 12, **dadurch gekennzeichnet, dass** der Sensor (12) die Geschwindigkeit der Bewegung mechanisch erfasst.

14. Schmiervorrichtung (1) nach Anspruch 12 oder 13, **dadurch gekennzeichnet, dass** der Sensor (12) die Geschwindigkeit der Bewegung optisch erfasst.

15. Anordnung (30), umfassend
- eine Schmiervorrichtung (1) nach einem der vorhergehenden Ansprüche, und
- eine Schmierstoffpumpe (31), und
- einen Schmierstoffvorratsbehälter (33), und
- eine Steuereinrichtung (34) zur Steuerung der Schmierstoffabgabe in Abhängigkeit von der Geschwindigkeit der Bewegung der Schmiervorrichtung.

## Claims

1. Lubricating device (1) for lubricating with a lubricant (50) the contact regions of a groove of a power rail, which contact regions are designed to hold a contact wire, comprising a guide means (2) for guiding the lubricating device (1) along the power rail and
a lubricant dispensing facility (3) which is suited to dispensing the lubricant to the contact regions of the power rail when the lubricating device (1) is attached to the power rail.

2. Lubricating device (1) according to claim 1, **characterised in that** the guide means (2) is embodied for the form-fit and slidable engagement into the groove of the power rail.

3. Lubricating device (1) according to claim 2, **characterised in that** the guide means (2) comprises two holding elements (4) which can be tiled about a tilting point (5), which, in the tilted state (7) can be introduced through the groove into the power rail and in the non-tilted state (6) hold the guide means on the power rail.

4. Lubricating device (1) according to claim 3, **characterised in that** the holding elements (4) form a substantially V-shaped section (8) in the non-tilted state (6).

5. Lubricating device (1) according to claim 3, **characterised in that** the holding elements (4) form a substantially Y-shaped cross-section in the non-tilted state (6).

6. Lubricating device (1) according to one of the preceding claims, **characterised in that** the guide means (2) has a first pressing means for pressing the guide means against the power rail.

7. Lubricating device (1) according to claim 6, **characterised in that** the first pressing means comprises a spring element.

8. Lubricating device (1) according to one of the preceding claims, **characterised in that** the lubricant dispensing facility (3) comprises a controllable lubricant valve (9).

9. Lubricating device (1) according to one of the preceding claims, **characterised in that** the lubricant dispensing facility (3) has a lubricant brush (10) for uniformly applying the lubricant (50) to the contact regions of the power rail.

10. Lubricating device (1) according to claim 9, **characterised in that** the lubricant brush (10) has a second pressing means (11) for pressing the lubricant brush (10) against the contact regions of the power rail.

11. Lubricating device (1) according to claim 10, **characterised in that** the second pressing means (11) comprises a spring element.

12. Lubricating device (1) according to one of the preceding claims, **characterised in that** the lubricating device (1) has a sensor (12) for capturing the speed as the lubricating device (1) moves along the power rail.

13. Lubricating device (1) according to claim 12, **characterised in that** the sensor (12) captures the speed of the movement mechanically.

14. Lubricating device (1) according to claim 12 or 13, **characterised in that** the sensor (12) captures the speed of the movement visually.

15. Arrangement (30), comprising
- a lubricating device (1) according to one of the preceding claims, and
- a lubricant pump (31), and
- a lubricant storage container (33), and
- a control facility (34) for controlling the dispensing of the lubricant as a function of the speed of the movement of the lubricating device.

## Revendications

1. Dispositif (1) de lubrification, pour lubrifier les parties de contact, prévues pour recevoir un fil de contact, d'une rainure d'un rail d'alimentation en courant par un lubrifiant (50), comprenant
un moyen (2) de guidage, pour guider le dispositif (1) de lubrification le long du rail d'alimentation en courant et
un dispositif (3) de distribution de lubrifiant, propre à distribuer le lubrifiant sur les parties de contact du rail d'alimentation en courant, lorsque le dispositif (1) de lubrification est mis sur le rail d'alimentation en courant.

2. Dispositif (1) de lubrification suivant la revendication 1, **caractérisé en ce que** le moyen (2) de guidage est conformé à complémentarité de forme et à pénétration avec possibilité de déplacement par glissement dans la rainure du rail d'alimentation en courant.

3. Dispositif (1) de lubrification suivant la revendication 2, **caractérisé en ce que** le moyen (2) de guidage comprend deux éléments (4) de maintien, pouvant basculer autour d'un point (5) de basculement, éléments qui, à l'état (7) basculé, peuvent être introduits par la rainure dans le rail d'alimentation en courant et qui, à l'état (6) non basculé, maintiennent le moyen de guidage sur le rail d'alimentation en courant.

4. Dispositif (1) de lubrification suivant la revendication 3, **caractérisé en ce que** les éléments (4) de maintien forment, à l'état (6) non basculé, une partie (8) sensiblement en forme de V.

5. Dispositif (1) de lubrification suivant la revendication 3, **caractérisé en ce que** les éléments (4) de maintien forment à l'état (6) non basculé, une partie sensiblement en forme de Y.

6. Dispositif (1) de lubrification suivant l'une des revendications précédentes, **caractérisé en ce que** le moyen (2) de guidage a un premier moyen d'application du moyen de guidage sur le rail d'alimentation en courant.

7. Dispositif (1) de lubrification suivant la revendication 6, **caractérisé en ce que** le premier moyen d'application comprend un élément à ressort.

8. Dispositif (1) de lubrification suivant l'une des revendications précédentes, **caractérisé en ce que** le dispositif (3) de distribution de lubrifiant comprend un robinet (9) de lubrifiant pouvant être commandé.

9. Dispositif (1) de lubrification suivant l'une des revendications précédentes, **caractérisé en ce que** le dispositif (3) de distribution de lubrifiant a une brosse (10) à lubrifiant, pour déposer uniformément le lubrifiant (50) sur les parties de contact du rail d'alimentation en courant.

10. Dispositif (1) de lubrification suivant la revendication 9, **caractérisé en ce que** la brosse (10) à lubrifiant a un deuxième moyen (11) d'application, pour appliquer la brosse (10) à lubrifiant sur les parties de contact du rail d'alimentation en courant.

11. Dispositif (1) de lubrification suivant la revendication 10, **caractérisé en ce que** le deuxième moyen (12) d'application comprend un élément à ressort.

12. Dispositif (1) de lubrification suivant l'une des revendications précédentes, **caractérisé en ce que** le dispositif (1) de lubrification a un capteur (12) de détection de la vitesse, lorsque le dispositif (1) de lubrification se déplace le long du rail d'alimentation en courant.

13. Dispositif (1) de lubrification suivant la revendication 12, **caractérisé en ce que** le capteur (12) relève mécaniquement la vitesse du déplacement.

14. Dispositif (1) de lubrification suivant la revendication 12 ou 13, **caractérisé en ce que** le capteur (12) relève optiquement la vitesse du déplacement.

15. Système (30), comprenant
- un dispositif (1) de lubrification suivant l'une des revendications précédentes et
- une pompe (31) de lubrifiant et
- un réservoir (33) de lubrifiant et
- un dispositif (34) de commande, pour commander la distribution de lubrifiant en fonction de la vitesse de déplacement du dispositif de lubrification.
